(19) Europäisches Patentamt
European Patent Office
Office européen des brevets

(11) Publication number: 0 219 885
A2

(12) # EUROPEAN PATENT APPLICATION

(21) Application number: 86114878.1

(51) Int. Cl.[4]: C 04 B 35/58

(22) Date of filing: 27.10.86

(30) Priority: 25.10.85 US 791473

(43) Date of publication of application:
29.04.87 Bulletin 87/18

(84) Designated Contracting States:
DE FR GB

(71) Applicant: SUMITOMO ELECTRIC INDUSTRIES LIMITED
No. 15, Kitahama 5-chome Higashi-ku
Osaka-shi Osaka 541(JP)

(72) Inventor: Yamakawa, Akira Itami Works of Sumitomo Electric
Industries, Ltd. 1-1, Koyakita 1-chome
Itami-shi Hyogo(JP)

(72) Inventor: Kamijo, Eiji Itami Works of Sumitomo Electric
Industries, Ltd. 1-1, Koyakita 1-chome
Itami-shi Hyogo(JP)

(74) Representative: Haft, Berngruber, Czybulka
Hans-Sachs-Strasse 5
D-8000 München 5(DE)

(54) **Sintered silicon nitride having improved density and mechanical strength and process for producing the same.**

(57) High-density and high-strength sintered $Si_3N_4$ and a process for producing the same is disclosed.

The sintered $Si_3N_4$ contains:

1 to 25 vol % of $ZrO_2$;

0.5 to 15 wt % of at least one element selected from the group consisting of Y and the rare earth elements of the Lanthanide group;

1 to 15 wt % of at least one element selected from the group consisting of the elements of IVa (except Zr), Va and VIa groups of the Periodic Table;

and the balance being $Si_3N_4$ consisting mainly of the β phase and containing the $ZrO_2$ and $Y_2O_3$ phase in the grain boundaries thereof.

Such a sintered $Si_3N_4$ presents a high hardness together with a high fracture toughness is suitable for use not only as a cutting tool material but also as a high temperature structural member such as parts of the engine.

EP 0 219 885 A2

SPECIFICATION

Title of the Invention

Sintered Silicon Nitride Having Improved Density and Mechanical Strength and Process for Producing the Same

Field of the Invention

The present invention relates to a sintered silicon nitride (which will be referred as "$Si_3N_4$) having an improved density and mechanical strength and the process for producing the same.

More particularly, the present invention relates to a sintered $Si_3N_4$ which is excellent with respect to the density, mechanical strength, fracture toughness, heat resistance and heat impact resistance and is suitable for use not only for a cutting tool but also as a heat resisting member of the engines, and a process for producing the same.

Background of the Invention

The sintered $Si_3N_4$ has hithereto attracted the attention of the industrial circles concerned as one of new engineering ceramics for use as a high temperature structural member. $Si_3N_4$ is, however, a compound in which the atoms tend to be bonded together by covalent bonding, and thus it is difficult to sinter as it is. Then, compounds of low melting point are generally added to $Si_3N_4$ to improve the sintering property.

In most of the prior art processes, the sintering agents of oxides have been used such as the oxides of aluminum (Al), magnesium (Mg), yttrium (Y), rare earth elements of Lantanide series such as lantanum (La) and cerium (Ce), beryllium (Be) and ziroconium (Zr). Further, nitrides and oxinitrides of the these elements have been also used as a sintering agent.

In any of the above prior art processes, however, it has been difficult to produce a sintered $Si_3N_4$ presenting all together a high bending strength, a fracture toughness and a high hardness. Further it is necessary to conduct the pressurized sintering such as hot pressing in order to obtain $Si_3N_4$ of a relatively high density. But the pressurized sintering necessitates a complicated equipment of low productivity. Further it is difficult to sinter a compact of a complicated configuration by the pressurized sintering and thus the production cost is expensive.

An article by INOMATA et al in No. 82, vol. 12, 1976 of the Journal of the Association of Ceramic Industry has disclosed that zirconium oxide (which will be referred as "$ZrO_2$") is effective for improving the sintering property of $Si_3N_4$. In the process of INOMATA et al, however, monoclinic $ZrO_2$ of a high purity was used as $ZrO_2$ material. Although the above article is silent on the other properties of the used $ZrO_2$, it is supposed that there would arise a phase transformation of $ZrO_2$ in the course of the sintering of $Si_3N_4$, when such a $ZrO_2$ material is used. Moreover, our experiments revealed a degradation in the high temperature properties in the obtained sinter.

Summary of the Invention

Accordingly, the object of the present invention is to provide a new sintered $Si_3N_4$ having an improved density and mechanical strength and a process for producing the same.

More particularly, the object of the present invention is to provide a high-density and high-strength sintered $Si_3N_4$ and a process for producing the same, which sintered $Si_3N_4$ presents a high hardness together with a high fracture toughness and is suitable for use not only as a cutting tool material but also as a high temperature structural member such as parts of the engine.

Another object of the present invention is to provide a process for producing a sintered $Si_3N_4$ of a high density and a high mechanical strength, which can be conducted satisfactorily under either of the depressurized condition and non-pressurized condition.

According to the present invention, there is provided a sintered $Si_3N_4$ containing:

1 to 25 vol % of $ZrO_2$;

0.5 to 15 wt % of at least one element selected from the group consisting of Y and the rare earth elements of the Lanthanide group;

1 to 15 wt % of at least one element selected from the group consisting of the elements of IVa (except Zr), Va and VIa groups of the Periodic Table;
and the balance being $Si_3N_4$ consisting mainly of the $\beta$ phase and containing the $ZrO_2$ and $Y_2O_3$ phase in the grain boundaries thereof.

The mean grain size of the $Si_3N_4$ in the $\beta$ phase is preferably lower than 3 microns.

According to an embodiment of the present invention, $ZrO_2$ is contained as the stabilized cubic $ZrO_2$. That is, $ZrO_2$ has been preferably stabilized by at least one member selected from the group consisting of CaO, MgO and $Y_2O_3$.

According to a preferred embodiment of the present invention, the element of the IVa (except Zr), Va and VIa of the Periodic Table is contained as any one of the carbide, nitride, carbonitride, oxide and solid solution thereof.

According to the present invention, there is also provided a process for producing a sintered $Si_3N_4$, said process comprising the steps of:

preparing a mixture of powder containing:

1 to 25 vol % of $ZrO_2$;

0.5 to 20 wt % of $Y_2O_3$:

1 to 15 wt % of at least one element selected from the IVa (except Zr), Va and VIa groups of the Periodic Table, the balance being of $Si_3N_4$;

heating the mixture at a temperature of 1600 to 1900°C under nitrogen atmosphere,
whereby obtaining a sintered $Si_3N_4$ substantially of the $\beta$ phase.

It is preferable that the mean particle size of the $Si_3N_4$ powder is lower than 2 microns.

According to a still preferred embodiment of the present invention, the process further comprises, in advance of the mixing step, the steps of:

adding to the $ZrO_2$ powder about 11 mol % of at least one member selected from the group consisting of MgO, CaO and $Y_2O_3$;

heating the thus obtained mixture to higher than 1200°C. to stabilize $ZrO_2$.

The sintering may be conducted under depressurized or pressurized cindition.

Description of the Preferred Embodiments of the Invention

In view of attaining the above objects of the present invention, we conducted experiments and researches with a variety of sintering agents, and found that a sintered $Si_3N_4$ excellent at the same time in the mechanical strength and in the hardness is obtainable by using as sintering agents $ZrO_2$ together with at least one member selected from the oxides and nitrides of Y and the elements of the Lanthanide series and at least one member selected from the group consisting of the carbides, nitrides, carbonitrides, oxides and solid solution thereof of the elements of the IVa (except Zr), Va and VIa groups of the Periodic Table, such as Ti, Hf, V, Nb, Ta, Cr, Mo and W.

$ZrO_2$ tends to react with $Y_2O_3$ and/or the rare earth elements of the Lanthanide series to intensify the sintering property to thereby heighten the density of the sintered $Si_3N_4$. Namely, $ZrO_2$ reacts with $Y_2O_3$ and/or the carbide, nitride, carbonitride or oxide of the rare earth element of the Lanthanide series to form an amorphous material such as ZrYON in the grain boundary of $Si_3N_4$, which amorphous material bonds strongly the $Si_3N_4$ grains to thereby heighten the density of the sintered $Si_3N_4$. Further $ZrO_2$ is partially precipitated in the grain boundary of $Si_3N_4$ to improve the fracture toughness of the sintered $Si_3N_4$.

Carbides, nitrides, carbonitride or oxides of the elements of the IVa (except Zr), Va and VIa groups of the Periodic Table are effective for improving the sintering property and at the same time preventing abnormal grain growth of $Si_3N_4$ to thereby provide a sintered material composed of fine and uniform grain. In more detail, whithout the addition of these compound, the sintering agents of $Y_2O_3$ and $ZrO_2$ react with $SiO_2$ to form a liquid phase, in which $Si_3N_4$ is resolved in the course of the sintering. Thus the sintering proceeds while $Si_3N_4$ is recrystallized from the liquid phase, which is inevitably accompanied with the grain growth of $Si_3N_4$. The compounds of the elements of the IVa (except Zr), Va and VIa groups of the Periodic Table tend, however, to be diffused in the liquid phase to supress the grain growth of the precipitated $Si_3N_4$.

Further these carbides, nitrides, carbonitride and oxides of the element of IVa (except Zr), Va and VIa groups of the Periodic Table themselves present a high hardness and are stable at high temperatures, and therefore they are effective to provide a sinter being excellent in mechanical and thermal properties. That is, $Si_3N_4$ has generally a low hardness and a low abrasive resistance because Si has a high affinity with Fe and presents a low hardness. To the contrary, the carbides, nitrides, carbonitride and oxides of the element of IVa (except Zr), Va and VIa groups of the Periodic Table have a low affinity with Fe and present a high hardness, so that they are effective for improving the abrasive resistance of the cutting tool made from $Si_3N_4$. The addition of these carbides, nitrides, carbonitrides or oxides together with $Y_2O_3$ and $ZrO_2$ enables to obtain a sintered material having a high abrasive resistance which can not be attained only with the addition of $Y_2O_3$ and $ZrO_2$.

These elements of IVa (except Zr), Va and VIa groups of the Periodic Table may be contained in the sintered $Si_3N_4$ in any form of carbide, nitride, carbonitride, oxide, solid solution and admixture thereof and the adding effect thereof is the same in any form.

If the resulting sinter contains $ZrO_2$ in an amount of lower than 1 vol%, the effect of the addition thereof is not significant. On the other hand, with $ZrO_2$ in an amount of higher than 25 vol%, the content of $Si_3N_4$ in the resulting sintered $Si_3N_4$ becomes proportionally lesser so that the mechanical strength and the hardness of the resulting

sintered $Si_3N_4$ are abruptly lowered and, as explained in detail hereinafter, the grain growth is observed with a result that the mechanical strength and the abrasive resistance are further lowered. Accordingly, the content of $ZrO_2$ should be in the range of 1 to 25 vol%.

The content of $Y_2O_3$ and the nitride or oxide of the rare earth elements of the Lanthanide series are defined in terms of the weight percent of these elements contained in the resulting sintered $Si_3N_4$. If the amount of these elements is lower than 0.5 wt%, the adding effect is not significant, while the addition of these elements in an amount higher than 10 wt% lowers the high temperature strength and makes the microspcopic structure of the resulting $Si_3N_4$ coarser with a result that the mechanical strength and the abrasive resistance are lowered. Accordingly, these elements should be contained in an amount of 0.5 to 10 wt% in the form of carbide, nitride, carbonitride, oxide or solid solution thereof.

The adding amount of carbides, nitrides carbonitride, oxide or solid solution of the element of IVa (except Zr), Va and VIa groups of the Periodic Table is defined in terms of the amount of these elements in the sintered material. If the content of these element in the sintered material is lower than 1 wt%, a significant adding effect is not obtained. The addition of these elements of higher than 15 wt% adversely affects the sintering property. Accordingly, the content of the elements belonging to IVa (except Zr), Va and VIa groups of the Periodic Table should be in the range of 1 to 15 wt% of the sintered material.

According to an embodiment of the present invention, $ZrO_2$ is cubic crystal stabilized by oxides such as MgO, CaO and $Y_2O_3$.

$ZrO_2$ has three kinds of polymorphes, that is, monoclinic $ZrO_2$(m-$ZrO_2$), tetragonal $ZrO_2$(t-$ZrO_2$) and cubic $ZrO_2$(c-$ZrO_2$). While m-$ZrO_2$ is stable up to about 1100°C., it transforms to t-$ZrO_2$ over 1100°C. and to c-$ZrO_2$ over 2370°C. These phase transformations occur in reverse direction by cooling. Among them, it should be noted that the phase transformation between m-$ZrO_2$ and t-$ZrO_2$ is accompanied with a change in volume as large as 4%.

According to an embodiment of the present invention, stabilized c-$ZrO_2$ is used as a material of the $Si_3N_4$ sinter to prevent the phase transformation of $ZrO_2$ for improving the heat resistance.

$ZrO_2$ may be stabilized by adding to $ZrO_2$ anyone of MgO, CaO and $Y_2O_3$ in an amount of about 11 mol% and heating the mixture to higher than 1200°C.

According to a preferred embodiment of the invention, $Y_2O_3$ powder in an amount of 5 to 15 mol% on the basis of the amount of $ZrO_2$ is added to a $ZrO_2$ powder and the mixture is heated to higher than 1200°C. to stabilize $ZrO_2$ as c-$ZrO_2$. The resulting c-$ZrO_2$ is employed as a starting material of the sinter. The stabilization may be conducted by subjecting the mixture to the coprepicitation method, etc.

According to the result of the experiments conducted by the present inventors, the mechanical strength and the abrasive resistance of the sintered $Si_3N_4$ are affected by the grain size of $Si_3N_4$. With a larger grain size, the mechanical strength and the abrasive resistance become lowered. If the grain size is larger than 3 microns, the sintered material is degraded in these properties.

Powders of $Si_3N_4$, $ZrO_2$ and $Y_2O_3$ were mixed in various ratios and the thus obtained mixtures were sintered at .850$^oC$. The mean grain size of the resulting sintered materials was determined and the result is shown in Table 1.

Table 1

| $ZrO_2$ (wt %) | $Y_2O_3$ (wt %) | $Si_3N_4$ | mean grain size (micron) |
|---|---|---|---|
| 3 | 1.5 | balance | 1.5 |
| 7 | 3.5 | balance | 2.0 |
| 20 | 10 | balance | 2.8 |
| 30 | 15 | balance | 3.5 |

Further a mixture of powders of 7vol%$ZrO_2$-3.5wt%$Y_2O_3$-$Si_3N_4$ was sintered at various temperatures and the grain size of the resulting sintered materials was determined. The result is also shown in Table 2.

Table 2

| sintering temperature (°C) | mean grain size (micron) |
|---|---|
| 1750 | 1.0 |
| 1850 | 2.0 |
| 1950 | 4.0 |

It is understood from the results shown in Tables 1 and 2 that the more the adding amount of the sintering agents such as $ZrO_2$ and $Y_2O_3$ is, the coarser becomes the structure of the sintered material, and that such a grain growth is observed with the raise in the sintering temperature.

The process of producing a sintered $Si_3N_4$ according to the present invention will be explained in the followings:

First, $Si_3N_4$, $Y_2O_3$ or the compound of the rare earth element of the Lanthanide series, $ZrO_2$, preferably stabilized $ZrO_2$, and at least one member selected from the group consisting carbide, nitride carbonitride, oxide or solid solution thereof of the elements belonging to IVa (except Zr), Va and VIa groups of the Periodic Table are mixed in a certain ratio and ground and mixed sufficiently by means of a ball mill, etc.

Next, the resulting mixture is compacted and sintered in a nitrogen atmosphere under high or normal pressure.

The hot pressing may be preferably conducted. under a pressure of higher than $50kg/cm^2$ and at a temperature of 1600 to 1900°C., preferably of 1700 to 1800°C. to thereby obtain $Si_3N_4$ of $\beta$ phase, because $Si_3N_4$ transforms to $\beta$ phase at about 1700°C. The identification of the phase of $Si_3N_4$ can be made by X-ray diffraction.

The pressure in the nitrogen atmosphere may be a minimum value under which the decomposition of $Si_3N_4$ can be supressed. For example, the nitrogen atmosphere may be maintained under 1 atm. at a sitering temperature of 1700°C., and 10 atm. at a sintering temperature of 1800°C.

Further, for degassing the compact of the green compact, it may be heated under vacuum up to a temperature at which $Si_3N_4$ is not decomposed.

The present invention will be explained in more detail by way of Examples which illustrates the present invention for representing the effect of the present invention. Thus, the example should not be construed to restrict the scope of the invention.

Example 1

Mixtures of powder each having a chemical composition shown in Table 3 were wet ground and then dried. The resulting mixtures of powder were compacted by hydrostatically applying 1 $ton/cm^2$.

Each of the green compacts was cut to the form of a bar of 6mm x 6mm x 40mm and then sintered at 1750°C. and under a nitrogen atmosphere of 2 atm. for two hours.

The chemical composition, density and bending strength of each of the resulting sintered $Si_3N_4$ were determined, of which results are shown in Table 4.

Table 3(1)

| | No. | $ZrO_2$ (vol%) | $Y_2O_3$ (wt%) | $CeO_3$ (wt%) | TiN | TaC | TaN | $WO_2$ | TiC | HfC | WC | $Si_3N_4$ |
|---|---|---|---|---|---|---|---|---|---|---|---|---|
| | | | | | (in terms of wt% of the element) | | | | | | | |
| * | 1 | 7 | 0.3 | — | — | — | — | — | — | — | — | balance |
| * | 2 | 7 | 12 | — | — | — | — | — | — | — | — | balance |
| * | 3 | 0.8 | 5 | — | — | — | — | — | — | — | — | balance |
| * | 4 | 2 | 5 | — | — | — | — | — | — | — | — | balance |
| * | 5 | 30 | 5 | — | — | — | — | — | — | — | — | balance |
| * | 6 | 7 | — | 5 | — | — | — | — | — | — | — | balance |
| * | 7 | 7 | 5 | — | 0.5 | — | — | — | — | — | — | balance |
| | 8 | 7 | 5 | — | 1.5 | — | — | — | — | — | — | balance |
| | 9 | 7 | 5 | — | 5 | — | — | — | — | — | — | balance |
| | 10 | 7 | 5 | — | 10 | — | — | — | — | — | — | balance |

* indicates a control example.

Table 3(2)

| | No. | $ZrO_2$ (vol%) | $Y_2O_3$ (wt%) | $CeO_3$ | TiN (in terms of wt% of the element) | TaC | TaN | $WO_2$ | TiC | HfC | WC | $Si_3N_4$ |
|---|---|---|---|---|---|---|---|---|---|---|---|---|
| | 11 | 7 | 5 | — | 14 | — | — | — | — | — | — | balance |
| * | 12 | 7 | 5 | — | 17 | — | — | — | — | — | — | balance |
| | 13 | 7 | 5 | — | — | 10 | — | — | — | — | — | balance |
| | 14 | 7 | 5 | — | — | — | 10 | — | — | — | — | balance |
| | 15 | 7 | 5 | — | — | — | — | 10 | — | — | — | balance |
| | 16 | 7 | 5 | — | — | — | — | — | 10 | — | — | balance |
| | 17 | 7 | 5 | — | — | — | — | — | — | 10 | — | balance |
| | 18 | 7 | 5 | — | — | — | — | — | — | — | 10 | balance |
| | 19 | 7 | 5 | — | 5 | — | — | — | 5 | — | — | balance |

* indicates a control example.

Table 4(1)

| | No. | $ZrO_2$ (vol%) | $Y_2O_3$ (wt%) | $CeO_3$ (wt%) | TiN | TaC | TaN | $WO_2$ | TiC | HfC | WC | $Si_3N_4$ | density (wt%) | weight loss (wt%) | hardness ($H_{RA}$) | bending strength ($kg/mm^2$) |
|---|---|---|---|---|---|---|---|---|---|---|---|---|---|---|---|---|
| | | | | | ( in terms of wt% of the element ) | | | | | | | | | | | |
| * | 1 | 7 | 0.3 | — | — | — | — | — | — | — | — | balance | 90 | 2 | 89 | 60 |
| * | 2 | 7 | 12 | — | — | — | — | — | — | — | — | balance | 96 | 3 | 90 | 65 |
| * | 3 | 0.8 | 5 | — | — | — | — | — | — | — | — | balance | 88 | 2 | 86 | 45 |
| * | 4 | 2 | 5 | — | — | — | — | — | — | — | — | balance | 95 | 1 | 93 | 65 |
| * | 5 | 30 | 5 | — | — | — | — | — | — | — | — | balance | 90 | 2 | 89 | 60 |
| * | 6 | 7 | — | 5 | — | — | — | — | — | — | — | balance | 93 | 2 | 92 | 65 |
| * | 7 | 7 | 5 | — | 0.5 | — | — | — | — | — | — | balance | 93 | 2 | 92 | 65 |
| | 8 | 7 | 5 | — | 1.5 | — | — | — | — | — | — | balance | 94 | 2 | 93 | 90 |
| | 9 | 7 | 5 | — | 5 | — | — | — | — | — | — | balance | 94 | 2 | 93 | 95 |
| | 10 | 7 | 5 | — | 10 | — | — | — | — | — | — | balance | 94 | 2 | 93 | 95 |

* indicates a control example.

Table 4(2)

| | No. | $ZrO_2$ (vol%) | $Y_2O_3$ (wt%) | $CeO_3$ (wt%) | TiN (in terms of wt% of the element) | TaC | TaN | $WO_2$ | TiC | HfC | WC | $Si_3N_4$ | density (wt%) | weight loss (wt%) | hardness ($H_{RA}$) | bending strength ($kg/mm^2$) |
|---|---|---|---|---|---|---|---|---|---|---|---|---|---|---|---|---|
| | 11 | 7 | 5 | — | 14 | — | — | — | — | — | — | balance | 93 | 4 | 94 | 85 |
| * | 12 | 7 | 5 | — | 17 | — | — | — | — | — | — | balance | 90 | 4 | 90 | 65 |
| | 13 | 7 | 5 | — | — | 10 | — | — | — | — | — | balance | 95 | 2 | 93 | 80 |
| | 14 | 7 | 5 | — | — | — | 10 | — | — | — | — | balance | 95 | 2 | 93 | 80 |
| | 15 | 7 | 5 | — | — | — | — | 10 | — | — | — | balance | 97 | 2 | 93 | 80 |
| | 16 | 7 | 5 | — | — | — | — | — | 10 | — | — | balance | 96 | 2 | 93 | 80 |
| | 17 | 7 | 5 | — | — | — | — | — | — | 10 | — | balance | 96 | 2 | 93 | 80 |
| | 18 | 7 | 5 | — | — | — | — | — | — | — | 10 | balance | 96 | 2 | 93 | 80 |
| | 19 | 7 | 5 | — | 5 | — | — | — | 5 | — | — | balance | 97 | 2 | 93 | 80 |

* indicates a control example.

Example 2

The sintering process was conducted in the same manner as Example 1, except by employing a marketed MgO-stabilized $ZrO_2$ powder, CaO-stabilized $ZrO_2$ powder and $Y_2O_3$-stabilized $ZrO_2$ powder so that the resulting sintered $Si_3N_4$ had a chemical composition as shown in Table 5. In this example, Ti was added as TiN.

The density, hardness, bending strength of the resulting sintered $Si_3N_4$ and the weight loss in the course of the sintering were determined, and the results are shown also in Table 5.

Table 5

| No. | Stabilized $ZrO_2$ (vol %) | | | $Y_2O_3$ (wt %) | Ti as TiN (wt %) | $Si_3N_4$ |
|---|---|---|---|---|---|---|
| | by MgO | by CaO | by $V_2O_3$ | | | |
| 20 | 10 | — | — | 5 | 5 | balance |
| 21 | — | 10 | — | 5 | 5 | balance |
| 22 | — | — | 10 | 5 | 5 | balance |

| No. | density (%) | weight loss (%) | hardness ($R_{MA}$) | bending strength ($Kg/mm^2$) |
|---|---|---|---|---|
| 20 | 93 | 2 | 92 | 85 |
| 21 | 93 | 2 | 92 | 90 |
| 22 | 95 | 2 | 92.5 | 90 |

Example 3

The green compacts of specimens of Nos.20 and 22 were hot pressed at 1750°C. under a nitrogen atmosphere of 1 atm. for one hour by applying 200kg/cm$^2$ thereto.

The physical properties and the weight loss were determined and the results are shown in Table 6.

Table 6

| No. | density (%) | weight loss (%) | hardness ($R_{KA}$) | bending strength (Kg/mm$^2$) |
|---|---|---|---|---|
| 20 | 99 | 1 | 93.5 | 110 |
| 22 | 99 | 1 | 93.5 | 120 |

Claims:

1. Sintered $Si_3N_4$ containing:

1 to 25 vol % of $ZrO_2$;

0.5 to 15 wt % of at least one element selected from the group consisting of Y and the rare earth elements of the Lanthanide series;

1 to 15 wt % of at least one element selected from the group consisting of the elements of IVa (except Zr), Va and VIa groups of the Periodic Table;

and the balance being $Si_3N_4$ consisting mainly of the $\beta$ phase and containing the $ZrO_2$ and $Y_2O_3$ phase in the grain boundaries thereof.

2. Sintered $Si_3N_4$ as claimed in Claim 1, wherein the mean grain size of the $Si_3N_4$ in the $\beta$ phase is lower than 3 microns.

3. Sintered $Si_3N_4$ as claimed in anyone of Claims 1 and2, wherein $ZrO_2$ is contained as the stabilized cubic $ZrO_2$.

4. Sintered $Si_3N_4$ as claimed in Claim 3, wherein $ZrO_2$ has been stabilized by at least one member selected from the group consisting of CaO, MgO and $Y_2O_3$.

5. Sintered $Si_3N_4$ as claimed in anyone of Claims 1 to 4, wherein Y and/or the rare earth elements of the Lanthanide seriesis is contained as any one of the nitride or oxide

thereof.

6. Sintered $Si_3N_4$ as claimed in anyone of Claims 1 to 5, wherein the element of the IVa (except Zr), Va and VIa of the Periodic Table is contained as any one of the carbide, nitride, carbonitride, oxide and solid solution thereof.

7. Process for producing a sintered $Si_3N_4$, said process comprising the steps of:

preparing a mixture of powder containing:

1 to 25 vol % of $ZrO_2$;

0.5 to 20 wt % of $Y_2O_3$:

1 to 15 wt % of at least one element selected from the IVa (except Zr), Va and VIa groups of the Periodic Table, the balance being of $Si_3N_4$;

heating the mixture at a temperature of 1600 to 1900°C under nitrogen atmosphere,

whereby obtaining a sintered $Si_3N_4$ substantially of the $\beta$ phase.

8. Process for producing a sintered $Si_3N_4$ as claimed in Claim 7, wherein the mean particle size of the $si_3N_4$ powder is lower than 2 microns.

9. Process for producing a sintered $Si_3N_4$ as claimed in anyone of Claims 7 and 8, wherein the $ZrO_2$ powder is a stabilized $ZrO_2$.

10. Process for producing a sintered $Si_3N_4$ as claimed in Claim 9, wherein the $ZrO_2$ powder has been stabilized by any one of MgO, CaO and $Y_2O_3$, in advance of the mixing of the powders.

11. Process for producing a sintered $Si_3N_4$ as claimed in Claim 10, wherein the stabilized $ZrO_2$ is obtained by the steps of:

adding to the $ZrO_2$ powder about 11 mol % of at least one member selected from the group consisting of MgO, CaO and $Y_2O_3$;

heating the thus obtained mixture to higher than 1200°C. to stabilize $ZrO_2$.

12. Process for producing a sintered $Si_3N_4$ as claimed in anyone of Claims 7 to 11, wherein the sintering is conducted under depressurized cindition.

13. Process for producing a sintered $Si_3N_4$ as claimed in anyone of Claims 7 to 11, wherein the sintering is conducted under pressurized cindition.